Europäisches Patentamt

European Patent Office

Office européen des brevets

(19)

(11) Veröffentlichungsnummer: **0 157 945
B1**

(12) # EUROPÄISCHE PATENTSCHRIFT

(45) Veröffentlichungstag der Patentschrift:
12.04.89

(21) Anmeldenummer: **84116260.5**

(22) Anmeldetag: **22.12.84**

(51) Int. Cl.⁴: **B 60 T 15/18**

(54) **Anhänger-Steuerventil für druckmittelbetätigte Zugwagen-Bremsanlagen, insbesondere Druckluftbremsanlagen.**

(30) Priorität: **13.04.84 DE 3413909**

(43) Veröffentlichungstag der Anmeldung:
**16.10.85 Patentblatt 85/42**

(45) Bekanntmachung des Hinweises auf die Patenterteilung:
**12.04.89 Patentblatt 89/15**

(84) Benannte Vertragsstaaten:
**DE FR IT NL SE**

(56) Entgegenhaltungen:
**DE-A- 2 334 649
DE-A- 2 615 893
DE-B- 2 501 070
DE-B- 3 044 228**

(73) Patentinhaber: **ROBERT BOSCH GMBH, Postfach 50,
D-7000 Stuttgart 1 (DE)**

(72) Erfinder: **Henzler, Günther, Dipl.-Ing.,
Kremmlerstrasse 78, D-7000 Stuttgart 70 (DE)**

## Beschreibung

Die Erfindung geht aus von einem Anhänger-Steuerventil für druckmittelbetätigte Zugwagen-Bremsanlagen, insbesondere Druckluftbremsanlagen, der im Oberbegriff des Anspruchs 1 angegebenen Gattung. Ein derartiges Anhänger-Steuerventil ist beispielsweise bekannt durch die DE-B-2 501 070.

Bei Zugwagen-Bremsanlagen sind für den Brems- und Versorgungsdruck im Anhänger Maximalwerte gesetzlich vorgeschrieben, die nicht überschritten werden dürfen. Soll in der Zugwagen-Bremsanlage der Bremsdruck angehoben werden, so muß der Druck in der Vorrats- und Bremsleitung zum Anhänger auf die vorgeschriebenen Werte reduziert werden. Dies wird üblicherweise durch Druckbegrenzer in der zum Anhänger-Steuerventil führenden, von einem Bremskreis der Zugwagen-Bremsanlage abgezweigten Druckleitung und in der von der Druckquelle zum Anhänger-Steuerventil führenden Vorratsleitung erreicht. Bei der bekannten Bauart ist lediglich ein Absperr- bzw. Drosselventil in die Vorratsleitung eingesetzt. Eine solche Bauart hat zwar den Vorteil, daß das Anhänger-Steuerventil konstruktiv einfach mit wenig Bauelementen für die Zusatzfunktion der Druckbegrenzung aufgebaut ist und separate Druckbegrenzer in den Leitungen der Zugwagen-Bremsanlage mit der dadurch verbundener erhöhten Gefahr von Undichtigkeitsstellen überflüssig macht. Es ist aber nicht möglich, an den Auslässen abnehmbare Druckzumessungen, Brems- und Vorratsdruck, für den Anhänger nach einfacher Einjustierung des Anhänger-Steuerventils auf die zulässigen Werte automatisch zu begrenzen.

Der Erfindung liegt deshalb die Aufgabe zugrunde, diese Nachteile zu vermeiden und ein Anhänger-Steuerventil der eingangs genannten Art zu schaffen, das universell bei allen Zugwagen-Bremsanlagen einsetzbar ist und problemlos an unterschiedliche Betriebsbremsdrücke der Zugwagen-Bremsanlagen angepaßt werden kann. Durch die höhere Drucksteuerung des Anhänger-Steuerventils in Zugwagen-Bremsanlagen mit hohem Betriebsbremsdruck sollen zudem kleinere Strömungszeiten im Steuerventil und damit ein besseres Zeitverhalten des Anhängers bei der Bremsung erreicht werden.

Das integrierte und mit dem Druckbegrenzungsventil kombinierte Drosselventil soll dazu dienen, bei einem Leck in der Bremsleitung zum oder im Anhänger oder bei einem Bruch dieser Bremsleitung die Druckquelle oder die Druckluftversorgungseinrichtung zum Anschluß zum Vorratsleitungs-Kupplungskopf hin abzusperren, so daß der im Anhänger vorhandene, über das Anhänger-Steuerventil füllbare Druckmittel-Vorratsbehälter in kürzester Zeit entlüftet und damit eine Notbremsung des Anhängers über die entlüftete Vorratsleitung ausgelöst werden kann. Andererseits soll das Drosselventil ein Füllen der Bremsanlage und des Druckmittel-Vorratsbehälters im Anhänger und damit ein Freigeben der Anhänger-Notbremse selbst während der Betätigung der Bremse im Zugwagen ermöglichen, was z. B. beim Ankuppeln eines Anhängers und Inbetriebnahme des Zuggespanns auf einer Gefällestrecke äußerst wichtig ist.

Diese Aufgabe wird gemäß der Erfindung bei einem gattungsgemäßen Anhänger-Steuerventil durch die kennzeichnenden Merkmale des Patentanspruches gelöst.

Durch die in den weiteren Ansprüchen aufgeführten Maßnahmen sind vorteilhafte Weiterbildungen und Verbesserungen des erfindungsgemäßen Anhänger-Steuerventils möglich.

Eine vorteilhafte Ausführungsform der Erfindung ergibt sich dabei aus den Ansprüchen 4 und 5. Durch diese Maßnahmen ist es möglich, das Anhänger-Steuerventil durch einfache Handgriffe an jeden Betriebsbremsdruck einer Zugwagen-Bremsanlage anzupassen.

Vorteilhafte Ausführungsformen der Erfindung ergeben sich auch aus dem Anspruch 12. Bei der Anordnung des kombinierten Druckbegrenzungs- und Drosselventils in einem Verbindungskanal zwischen der Ventileinlaßkammer und dem Auslaß zum Vorratsleitungs-Kupplungskopf wird die Ventileinlaßkammer mit dem hohen, noch nicht auf die Anhängerwerte reduzierten Vorratsdruck der Druckquelle beaufschlagt, wodurch die Strömungszeiten in den zum Anhänger führenden Druckmittelleitungen verkürzt werden.

Zeichnung

Die Erfindung ist anhand von in der Zeichnung dargestellten Ausführungsbeispielen in der nachfolgenden Beschreibung näher erläutert. Es zeigen:

Fig. 1 ein Blockschaltbild einer Zugwagen-Bremsanlage mit einem im Längsschnitt schematisch dargestellten Anhänger-Steuerventil,

Fig. 2 ausschnittweise einen Längsschnitt eines Anhänger-Steuerventils in Fig. 1 gemäß einem weiteren Ausführungsbeispiel.

Beschreibung der Ausführungsbeispiele

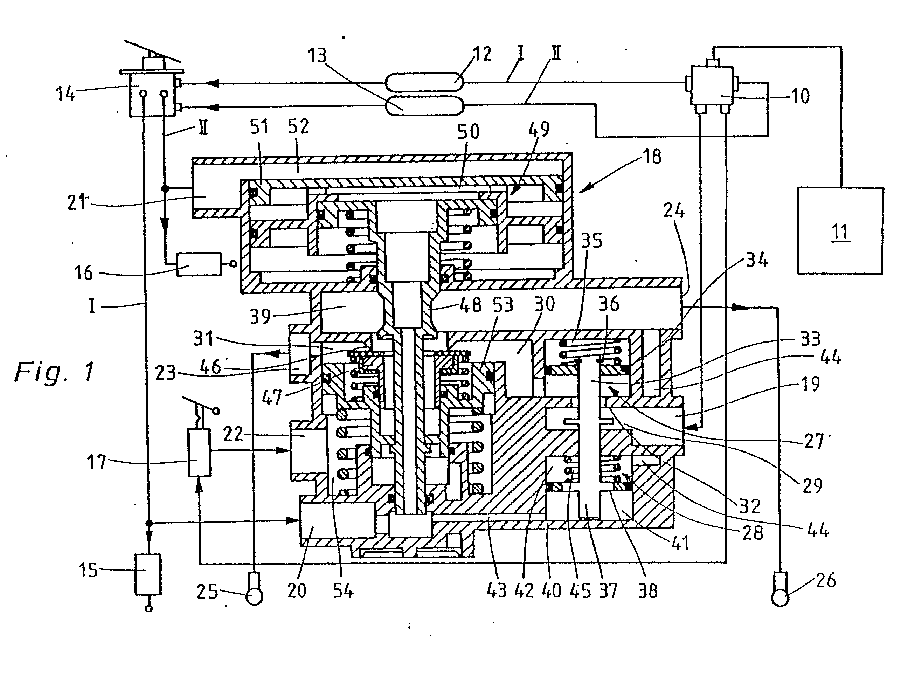

Die in Fig. 1 als Beispiel einer Zugwagen-Bremsanlage im Blockschaltbild dargestellte Druckluftbremsanlage ist über ein Mehrkreis-Schutzventil 10 an einer Druckluftversorgungseinrichtung 11 angeschlossen, die in die Bremsanlage einen Vorratsdruck von hier 10 bar einspeist. An dem Mehrkreis-Schutzventil 10 sind zwei Betriebsbremskreise I und II angeschlossen. Sie haben zwei Vorratsbehälter 12, 13, ein fußbetätigtes Zweikreis-Bremsventil 14, das Bremszylinder-Paare 15 und 16 auf dem Zugwagen versorgt. Weiter ist an dem Mehrkreis-Schutzventil 10 ein Feststellbremsventil 17 angeschlossen, das zum Überwachen von hier nicht dargestellten Federspeicherbremszylindern bestimmt ist und entweder durch Hand- oder Fußbetätigung ausgelöst wird.

Für den Anhänger-Betrieb ist ein Anhänger-Steuerventil 18 vorgesehen, das mit einem Einlaß 19 an dem Mehrkreis-Schutzventil 10 angeschlossen und hierdurch mit unter Vorratsdruck stehender Druckluft aus der Druckluftversorgungseinrichtung 11 oder Druckquelle versorgt wird. Zwei weitere Einlässe 20, 21 des Steuerventils 18 sind jeweils mit einem der Bremskreise I bzw. II verbunden. Diese beiden Einlässe werden mit dem Druck in den Bremskreisen beaufschlagt, der hier ebenfalls 10 bar beträgt. Ein vierter Einlaß 22 ist an das Feststellbremsventil 17 angeschlossen und wird mit einem Druck von hier 6 bar beaufschlagt. Ein erster Auslaß 23 des Steuerventils 18 ist mit einem Vorratsleitungs-Kupplungskopf 25 und ein zweiter Auslaß 24 mit einem Bremsleitungs-Kupplungskopf 26 für den Anhängerbetrieb verbunden.

Das Steuerventil 18 weist ein integriertes Druckbegrenzungsventil 27 auf, das mit einem ebenfalls integrierten Drosselventil 28 kombiniert ist. Mittels des Druckbegrenzungsventils 27 wird der Vorrats- und Bremsdruck an den Auslässen 23 und 24 des Steuerventils 18 auf einen für den Anhängerbetrieb zulässigen Druckwert von 7,5 bar begrenzt. Mittels des integrierten Drosselventils 28 wird bei Bruch der Bremsleitung im Anhänger der erste Auslaß 23 des Steuerventils vom ersten Einlaß 19 getrennt und damit ein Nachströmen von Druckluft aus der Druckluftversorgungseinrichtung 11 in den Anhänger-Vorratsbehälter über den Vorratsleitungs-Kupplungskopf 25 verhindert.

Das kombinierte Druckbegrenzungs- und Drosselventil 27, 28 ist bei dem Steuerventil 18 in Fig. 1 in einem Einlaßkanal 29 angeordnet, der den ersten Einlaß 19 mit einer Ventileinlaßkammer 30 verbindet. Die Ventileinlaßkammer 30 ist über einen Auslaßkanal 31 weiterhin mit dem ersten Auslaß 23 verbunden, der zum Vorratsleitungs-Kupplungskopf 25 führt. Dem kombinierten Druckbegrenzungs- und Drosselventil 27, 28 ist ein im Einlaßkanal 29 angeordneter Ventilsitz 32 und ein mit dem Ventilsitz 32 zusammenwirkendes Ventilglied 33 gemeinsam. Am Ventilglied 33 greift jeweils ein dem Druckbegrenzungsventil 27 und ein dem Drosselventil 28 zugeordnetes Betätigungsglied in Ventilschließrichtung an. Das Betätigungsglied des Druckbegrenzungsventils 27 ist als Schiebekolben 34 ausgebildet, der entgegen der Kraft einer Druckbegrenzungsfeder 35 relativ zum Ventilglied 33 axial verschieblich ist und vom Druck in Strömungsrichtung gesehen hinter dem Ventilsitz 32 beaufschlagt wird. Der Schiebekolben 34 greift an einem Mitnehmer 36 am Ventilglied 33 an und nimmt dieses in Schließrichtung mit. Die Druckbegrenzungsfeder 35 ist so bemessen, daß sie bei einem vorgebbaren Wert des Eingangsdrucks im Einlaßkanal 29, hier 7,5 bar, das Ventilglied 33 dichtend auf den Ventilsitz 32 auflegt, so daß nunmehr die Ventileinlaßkammer 30 von dem ersten Einlaß 19 getrennt ist.

Das Betätigungsglied des Drosselventils 28 ist als Stellkolben 37 ausgebildet, der stirnseitig an dem Ventilglied 33 anliegt und einen Ringflansch 38 trägt. Die Stirnflächen des Ringflansches 38 begrenzen zusammen mit dem Gehäuse 40 des Steuerventils 18 zwei Druckbeaufschlagungskammern 41, 42. Die Druckbeaufschlagungskammer 41 steht über einen Kanal 43 mit dem zweiten Einlaß des Steuerventils 18, der an dem Bremskreis I angeschlossen ist und die Druckbeaufschlagungskammer 42 über einen Kanal 44 mit dem zweiten Auslaß 24 des Steuerventils 18 in Verbindung, an dem der Bremsleitungs-Kupplungskopf 26 angeschlossen ist. In der Druckbeaufschlagungskammer 42 ist eine Rückstellfeder 45 angeordnet, die sich am Ringflansch 38 und an der gegenüberliegenden Gehäusewand abstützt und den Stellkolben 37 in der gezeichneten Grundstellung hält.

Der weitere Aufbau und die weitere Funktion des Steuerventils 18 ist an sich bekannt und z.B. in der DE-AS 3 044 228 ausführlich beschrieben, so daß hierauf nur noch kurz und der Vollständigkeit halber eingegangen wird.

Zwischen der Ventileinlaßkammer 30 und einer Ventilauslaßkammer 39, die mit dem zweiten Auslaß 24 des Steuerventils 18 verbunden ist, ist ein gehäusefester Ventilsitz 46 angeordnet, auf dem ein Ventilkörper 47 federnd aufliegt. Der Ventilkörper wird von einem hohlen Fortsatz 48 in Ventilschließrichtung betätigt, der an einem geteilten Steuerkolben 49 angeformt ist. Der Steuerkolben 49 begrenzt eine Steuerkammer 50, die durch den hohlen Fortsatz 48 mit dem zweiten Einlaß 20 des Steuerventils 18 in Verbindung steht. Ein zweiter Steuerkolben 51 ist koaxial zu dem ersten Steuerkolben 49 hinter diesem geführt und begrenzt eine Steuerkammer 52, die mit dem dritten Einlaß 21 des Steuerventils 18 verbunden ist. Bei einer Bremsbetätigung wird damit in die Steuerkammern 49, 52 über die beiden Bremskreise I und II ein Steuerdruck in der Größe des Bremsdrucks 10 bar eingesteuert. Am Fortsatz 48 greift weiterhin ein Hilfsbremskolben 53 an, der einen mit dem vierten Einlaß 22 des Steuerventils 18 verbundenen Druckraum 54 begrenzt und vom Ausgangsdruck des Feststellbremsventils 17 beaufschlagt wird. Wird das Zweikreis-Bremsventil 14 betätigt, so werden die Steuerkolben 49, 51 durch den eingesteuerten Bremsdruck nach unten bewegt. Der Fortsatz 48 hebt den Ventilkörper 47 vom Ventilsitz 46 ab, so daß Druckluft über den ersten Einlaß 19, die Ventileinlaßkammer 30 in die Ventilauslaßkammer 39 gelangt und dort zu dem Bremsleitungs-Kuppelungskopf 26 strömt. Damit wird eine Anhängerbremsung ausgelöst.

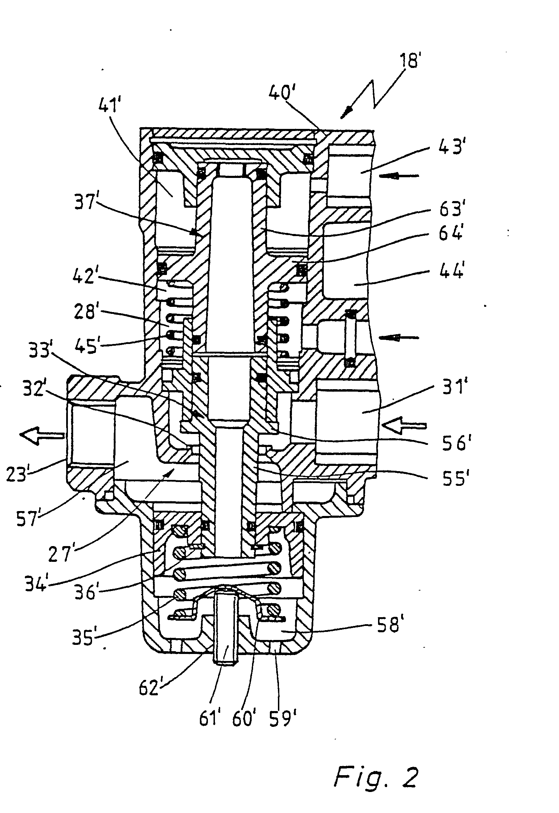

Das in Fig. 2 in seiner konstruktiven Gestaltung zu sehende, im Längsschnitt dargestellte Anhänger-Steuerventil 18' stimmt weitgehend mit dem zu Fig. 1 beschriebenen Anhänger-Steuerventil 18 überein, so daß gleiche Bauteile durch gleiche Bezugszeichen gekennzeichnet sind, die jedoch zur Unterscheidung mit einem Beistrich versehen sind. Gegenüber dem Steuerventil 18 in Fig. 1 ist das Steuerventil 18' in Fig. 2 so abgewandelt, daß das kombinierte Druckbegrenzungs- und Drosselventil 27', 28' nicht im Einlaßkanal sondern im Auslaßkanal 31' angeordnet ist. Das dem Druckbegrenzungsventil 27' und dem Drosselventil 28' gemeinsame Ventilglied 33' ist hier als ein durch den gehäusefesten Ventilsitz 32' hindurchtretendes Ventilrohr 55' mit auf dem Ventilsitz 32' aufsetzbarem Ringflansch 56' ausgebildet. Am unteren Ende des Ventilrohrs 55' sitzt der Schiebekolben 34' axial verschiebbar auf dem Ventilrohr 55' auf und liegt an dem Mitnehmer 36' an. Der Schiebekolben 34' dichtet ein mit dem ersten Auslaß 23' verbundenen Auslaßraum 57', der dem Ventilsitz 32' in Strömungsrichtung nachgeordnet ist, gegen eine Entlüftungskammer 58' ab, die über Bohrungen 59' mit der Umgebung in Verbindung steht. Die an dem Schiebekolben 34' sich abstützende Druckbegrenzungsfeder 35' liegt mit ihrem anderen Ende an einem bügelartigen Stützglied 60' an, das an einer Einstellschraube 61' befestigt ist. Die Einstellschraube 61' ist in einer Gewindebohrung 62' im Gehäuse 40' eingeschraubt. Durch mehr oder weniger tiefes Einschrauben der Einstellschraube 61' in der Gewindebohrung 62' läßt sich die Federkraft der Druckbegrenzungsfeder 35' justieren und damit der Begrenzungsdruck einstellen, auf welchen das kombinierte Druckbegrenzungs- und Drosselventil 27', 28' den Eingangsdruck im Auslaßkanal 31', der vor dem Ventilsitz 32' ansteht, reduziert.

Der Stellkolben 37' des Drosselventils 28' ist hier als Stellrohr 63' mit einem etwa mittig angeordneten Ringflansch 64' ausgebildet. Das Stellrohr 63' ist so ausgebildet, daß in der Grundstellung des Ventilrohrs 55', also bei drucklosem Auslaßkanal 31' und Auslaßraum 57' das Stellrohr 63' stirnseitig an dem Ventilrohr 55' anliegt. Zugleich stützt sich das Stellrohr 63' unter der Wirkung der Rückstellfeder 45' am Gehäuse 40' ab. Über das in die Entlüftungskammer 58' mit seiner Stirnseite hineinragende Ventilrohr 55' ist auch das Innere des Stellrohrs 63' entlüftet. Die von dem Ringflansch 64' jeweils begrenzten Druckbeaufschlagungskammern 41, 42 sind in gleicher Weise über Kanäle 43' und 44' mit dem Bremskreis I bzw. mit dem zu dem Bremsleitungs-Kupplungskopf 25' führenden Auslaß des Steuerventils verbunden. Die vom Druck beaufschlagten Flächen des Ringflansches 64' sind gleich groß ausgebildet.

Die Wirkungsweise des vorstehend beschriebenen Anhänger-Steuerventils mit integriertem Druckbegrenzungs- und Drosselventil ist anhand der Schemazeichnung in Fig. 1 im folgenden näher beschrieben:

In Fahrstellung sind die Druckbeaufschlagungskammern 41, 42 über Einlaß 20 und Ventilauslaßkammer 39 entlüftet. Der Stellkolben 37 wird über die Rückstellfeder 45 in der unteren Endlage gehalten. Der über den ersten Einlaß 19 eingesteuerte Vorratsdruck gelangt über den geöffneten Ventilsitz 32 in die Ventileinlaßkammer 30 und von dort über den Auslaßkanal 31 und den ersten Auslaß 23 zu dem Vorratsleitungs-Kupplungskopf 25. Der im Einlaßkanal 29 anstehende Druck wirkt über den geöffneten Ventilsitz 32 auf den Schiebekolben 34 und bewegt diesen entgegen der Kraft der Druckbegrenzungsfeder 35 nach oben. Der Schiebekolben 34 nimmt über den Mitnehmer 36 das Ventilglied 33 mit. Ist der mit der Druckbegrenzungsfeder 35 eingestellte Begrenzungsdruck erreicht, so wird der Ventilsitz 32 geschlossen. Der Einlaßkanal 29 ist damit von der Ventileinlaßkammer 30 getrennt und die Drücke auf beiden Seiten sind im Gleichgewicht. Sinkt der Vorratsdruck im Anhänger und damit auch in der Ventileinlaßkammer 30, wird das Kräftegleichgewicht am Ventilglied 33 gestört und der Ventilsitz 32 wieder so lange geöffnet, bis der Begrenzungsdruck für den Anhänger, hier 7,5 bar, wieder erreicht ist.

Wird durch Betätigen des Zweikreis-Bremsventils 14 eine Bremsung eingeleitet, so gelangt der eingesteuerte Bremsdruck in den Bremskreisen I und II einerseits in die Steuerkammer 50 und andererseits in die Steuerkammer 52 und beaufschlagt die Steuerkolben 49 bzw. 51. Der Fortsatz 48 bewegt sich nach unten und hebt den Ventilkörper 47 vom Ventilsitz 46 ab. Dadurch strömt Druckluft von der Ventileinlaßkammer 30 in die Ventilauslaßkammer 39 und von dort über den zweiten Auslaß 24 zu dem Bremsleitungs-Kupplungskopf 26. Der in der Ventilauslaßkammer 39 ausgesteuerte Druck gelangt über den Kanal 44 in die Druckbeaufschlagungskammer 42 und wirkt hier auf die obere Seite des Ringflansches 38 des Stellkolbens 37. Der im Bremskreis I eingesteuerte Bremsdruck gelangt über den Kanal 43 in die Druckbeaufschlagungskammer 41 und beaufschlagt hier die untere Seite des Ringflansches 38 des Stellkolbens 37. Da beide Drücke etwa gleich groß sind und auch die von den Drücken beaufschlagten Flächen des Ringflansches 38 gleich groß sind, bleibt der Stellkolben 37 in seiner Ruhelage.

Fällt die Bremsleitung im Anhänger aus, so fällt der Druck in der Ventilauslaßkammer 39 ab und damit auch über den Kanal 44 der Druck in der Druckbeaufschlagungskammer 42. Dadurch entsteht am Stellkolben 37 von der Druckbeaufschlagungskammer 41 her ein Kraftüberschuß, der den Stellkolben 37 entgegen der Kraft der Rückstellfeder 45 nach oben bewegt. Der nach oben gehende Stellkolben 37 stützt sich an dem Ventilglied 33 ab und der Ventilsitz 32 bleibt oder wird geschlossen. Es kann somit keine Druckluft von dem Einlaßkanal 29 in die Ventileinlaßkammer 30 gelangen und somit auch nicht über den Vorratsleitungs-Kupplungskopf 25 zu dem Anhänger. Der Ventilsitz 32 bleibt auch geschlossen, wenn der Vorratsdruck im Anhänger abfällt und damit auch in der Ventileinlaßkammer 30. Der bei Druckabfall unter der Wirkung der Druckbegrenzungsfeder 35 sich nach unten bewegende Schiebekolben 34 kann auf dem über den Stellkolben 37 festgesetzten Ventilglied 33 frei gleiten.

Die Wirkungsweise des in Fig. 2 dargestellten Anhänger-Steuerventils 18' ist die gleiche. Es ist nur zu beachten, daß das kombinierte Druckbegrenzungs- und Drosselventil 27', 28' im Auslaßkanal 31' angeordnet ist und somit in der Ventileinlaßkammer 30 der hohe vom Mehrkreis-Schutzventil 10 kommende Vorratsdruck von 10 bar und nicht der bereits durch das Druckbegrenzungsventil 27' reduzierte Druck von 7,5 bar eingesteuert wird.

Die Erfindung ist nicht auf die vorstehend beschriebenen Ausführungsbeispiele eines Anhänger-Steuerventils begrenzt. So kann das kombinierte Druckbegrenzungs- und Drosselventil anstatt in dem Einlaßkanal oder dem Auslaßkanal auch in einem davon getrennt im Gehäuse verlaufenden Verbindungskanal angeordnet sein. Wichtig ist dabei nur, daß der Verbindungskanal an dem ersten Einlaß 19 und an dem ersten Auslaß 23 des Steuerventils 18 angeschlossen ist.

Ferner ist es nicht erforderlich, die Ringflächen des Ringflansches 38 bzw. 64' gleich groß zu machen. Werden sie unterschiedlich bemessen, so ist die Kraftdifferenz durch entsprechende Bemessung der Rückstellfeder 45 bzw. 45' auszugleichen.

## Patentansprüche

1. Anhänger-Steuerventil (18) für druckmittelbetätigte Zugwagen-Bremsanlagen, insbesondere Druckluftbremsanlagen, mit jeweils einem Einlaß (19; 20, 21) zum Anschließen einer Druckquelle (11–13) und mindestens einer Bremsleitung (I, II) der Bremsanlage und jeweils einem Auslaß (23, 24) zum Anschließen eines Bremsleitungs-Kupplungskopfes (26) und eines Vorratsleitungs-Kupplungskopfes (25) und mit einem integrierten Drosselventil (28), das bei Druckabfall am Auslaß (24) zum Bremsleitungs-Kupplungskopf (26) während Druckeinsteuerung in den Bremsleitungs-Einlaß (21, 22) einen Verbindungskanal (29, 31') zwischen dem Druckquellen-Einlaß (19) und dem Auslaß (23) zum Vorratsleitungs-Kupplungskopf (25) bis zur völligen Sperrung drosselt, gekennzeichnet durch ein integriertes Druckbegrenzungsventil (27; 27'), das in dem Verbindungskanal (29, 31') angeordnet und mit dem Drosselventil (28; 28') kombiniert ist, wobei das Druckbegrenzungsventil (27; 27') und das Drosselventil (28, 28') einen im Verbindungskanal (29; 31') angeordneten gemeinsamen Ventilsitz (32, 32') und ein gemeinsames Ventilglied (33; 33') aufweisen, an dem jeweils ein dem Druckbegrenzungs- und Drosselventil (27, 28; 27', 28') zugeordnetes Betätigungsglied (34, 37; 34', 37') in Ventilschließrichtung angreift.

2. Steuerventil nach Anspruch 1, dadurch gekennzeichnet, daß das Betätigungsglied des Druckbegrenzungsventils (27; 27') als ein vom Druck in Strömungsrichtung hinter dem Ventilsitz (32, 32') beaufschlagbarer Schiebekolben (34; 34') ausgebildet ist, der relativ zum Ventilglied (33; 33') verschiebbar ist und in Ventilschließrichtung an einem Mitnehmer (36, 36') am Ventilglied (33; 33') angreift, und daß sich am Schiebekolben (34; 34') eine Druckbegrenzungsfeder (35, 35') entgegen der Druckbeaufschlagungsrichtung des Schiebekolbens (34; 34') abstützt.

3. Steuerventil nach Anspruch 2, dadurch gekennzeichnet, daß die Druckbegrenzungsfeder (35, 35') so bemessen ist, daß bei einem vorgebbaren Wert des Eingangsdruckes im Verbindungskanal (29; 31') das Ventilglied (33; 33') dichtend auf dem Ventilsitz (32; 32') aufliegt.

4. Steuerventil nach Anspruch 2 oder 3, dadurch gekennzeichnet, daß die Druckbegrenzungsfeder (35') mit dem dem Schiebekolben (34') gegenüberliegenden Ende an einem in Wirkrichtung der Druckbegrenzungsfeder (35') verschieblich gehaltenen Stützglied (60') anliegt.

5. Steuerventil nach Anspruch 4, dadurch gekennzeichnet, daß das Stützglied (60') an einer Einstellschraube (61') befestigt ist, die in einer Gewindebohrung (62') im Ventilgehäuse (40') verschraubbar ist und am Ventilgehäuse (40') frei zugänglich vorsteht.

6. Steuerventil nach einem der Ansprüche 1 bis 5, dadurch gekennzeichnet, daß das Betätigungsglied des Drosselventils (28, 28') als Stellkolben (37, 37') ausgebildet ist, der mit einer ersten Druckbeaufschlagungsfläche eine mit dem Bremsleitungs-Einlaß (20) in Verbindung stehende erste Druckbeaufschlagungskammer (41; 41') und mit der anderen Druckbeaufschlagungsfläche eine mit dem Auslaß (24) zum Bremsleitungs-Kupplungskopf (26) verbundene zweite Druckbeaufschlagungskammer (42; 42') begrenzt, und daß der Stellkolben (37, 37') das Ventilglied (33; 33') in Ventilschließrichtung beaufschlagt.

7. Steuerventil nach Anspruch 6, dadurch gekennzeichnet, daß in der zweiten Druckbeaufschlagungskammer (42, 42') eine sich an der Druckbeaufschlagungsfläche des Stellkolbens (37; 37') abstützende Rückstellfeder (45, 45') angeordnet ist.

8. Steuerventil nach Anspruch 6 oder 7, dadurch gekennzeichnet, daß die beiden Druckbeaufschlagungsflächen des Stellkolbens (37, 37') gleich groß ausgebildet sind.

9. Steuerventil nach einem der Ansprüche 1 bis 7, dadurch gekennzeichnet, daß das Ventilglied (33') als ein durch den Ventilsitz (32') hindurchtretendes Ventilrohr (55') mit auf dem Ventilsitz (32') aufsetzbarem Ringflansch (56') ausgebildet ist, das an einem Ende den Mitnehmer (36') trägt.

10. Steuerventil nach Anspruch 9, dadurch gekennzeichnet, daß der Schiebekolben (34') auf dem Ventilrohr (55') axial verschiebbar aufsitzt und daß der Schiebekolben (34') den Verbindungskanal (31') gegen eine Entlüftungskammer (58') abdichtet, in welche das Ventilrohr (55') hineinragt.

11. Steuerventil nach Anspruch 9 oder 10, dadurch gekennzeichnet, daß der Stellkolben (37') als Stellrohr (63') mit mittig angeordnetem, die Stellkolben-Druckbeaufschlagungsflächen bildenden Ringflansch (64') ausgebildet ist und daß das Stellrohr (63') und das Ventilrohr (55') in ihrer Grundstellung stirnseitig aneinanderstoßen.

12. Steuerventil nach einem der Ansprüche 1 bis 11, gekennzeichnet durch eine Ventileinlaßkammer (30), die über einen Einlaßkanal (29) mit dem Druckquellen-Einlaß (19) und über einen Auslaßkanal (31; 31') mit dem Auslaß (23; 23') zum Vorratsleitungs-Kupplungskopf (25) verbunden ist und daß der Verbindungskanal von dem Einlaßkanal (29) oder dem Auslaßkanal (31') gebildet ist.

## Claims

1. Trailer control valve (18) for pressure medium-operated towing-vehicle brake installations, particularly compressed air brake installations, having in each case one inlet (19; 20, 21) for connecting a pressure source (11–13) and at least one brake line (I, II) of the brake installation, and in each case one outlet (23, 24) for connecting a brake line coupling head (26) and a supply line coupling head (25), and having an integrated restriction valve (28) which, in the case of a pressure drop at the outlet (24) to the brake line coupling head (26) during the controlled input of pressure into the brake line inlet (21, 22), restricts, up to complete isolation, a connecting channel (29, 31') between the pressure source inlet (19) and the outlet (23) to the supply line coupling head (25), characterized by an integrated pressure limiting valve (27; 27') which is arranged in the connecting channel (29, 31') and is combined with the restriction valve (28; 28'), the pressure limiting valve (27; 27') and the restriction valve (28, 28') having a common valve seat (32, 32'), arranged in the connecting channel (29; 31'), and a common valve member (33; 33'), on each of which an actuating member (34, 37; 34', 37') associated with the pressure limiting and restriction valve (27, 28; 27', 28') acts in the valve closing direction.

2. Control valve according to Claim 1, characterized in that the actuating member of the pressure limiting valve (27; 27') is designed as a sliding piston (34; 34') which can be subjected to the pressure behind the valve seat (32, 32'), as viewed in the direction of flow, can be displaced relative to the valve member (33; 33') and, in the valve closing direction, acts on a driving element (36, 36') on the valve member (33; 33'), and in that a pressure limiting spring (35, 35') is supported on the sliding piston (34; 34'), counter to the pressure-loading direction of the sliding piston (34; 34').

3. Control valve according to Claim 2, characterized in that the pressure limiting spring (35; 35') is dimensioned such that, at a specifiable value of the inlet pressure in the connecting channel (29; 31'), the valve member (33; 33') rests sealingly on the valve seat (32; 32').

4. Control valve according to Claim 2 or 3, characterized in that the pressure limiting spring (35') rests by the end opposite the sliding piston (34') against a supporting member (60') which is held displaceably in the direction of action of the pressure limiting spring (35').

5. Control valve according to Claim 4, characterized in that the supporting member (60') is secured on an adjusting screw (61') which can be screwed in a threaded bore (62') in the valve housing (40') and protrudes in freely accessible manner at the valve housing (40').

6. Control valve according to one of Claims 1 to 5, characterized in that the actuating member of the restriction valve (28, 28') is designed as a positioning piston (37, 37') which, with a first pressure-loading surface, delimits a first pressure-loading chamber (41; 41') connected to the brake line inlet (20) and, with the other pressure-loading surface, delimits a second pressure-loading chamber (42; 42') connected to the outlet (24) to the brake line coupling head (26), and in that the positioning piston (37, 37') acts on the valve member (33; 33') in the valve closing direction.

7. Control valve according to Claim 6, characterized in that a restoring spring (45, 45') supported on the pressure-loading surface of the positioning piston (37; 37') is arranged in the second pressure-loading chamber (42, 42').

8. Control valve according to Claim 6 or 7, characterized in that the two pressure-loading surfaces of the positioning piston (37, 37') are of the same size.

9. Control valve according to one of Claims 1 to 7, characterized in that the valve member (33') is designed as a valve tube (55') which protrudes through the valve seat (32') and has an annular flange (56') which can be placed on the valve seat (32') and, at one end, bears the driving element (36').

10. Control valve according to Claim 9, characterized in that the sliding piston (34') is mounted in axially displaceable manner on the valve tube (55'), and in that the sliding piston (34') seals the connecting channel (31') with respect to a venting chamber (58') into which the valve tube (55') protrudes.

11. Control valve according to Claim 9 or 10, characterized in that the positioning piston (37') is designed as a positioning tube (63') having a centrally arranged annular flange (64') which forms the pressure-loading surfaces of the positioning piston, and in that, in their rest position, the positioning tube (63') and the valve tube (55') abut at their end faces.

12. Control valve according to one of Claims 1 to 11, characterized by a valve inlet chamber (30) which is connected via an inlet channel (29) to the pressure source inlet (19) and, via an outlet channel (31; 31'), to the outlet (23; 23') to the supply line coupling head (25), and in that the connecting channel is formed by the inlet channel (29) or the outlet channel (31').

**Revendications**

1. Soupape de commande pour remorques (18) pour installations de freinage, actionnées par un fluide, sur le véhicule tracteur, particulièrement installations à air comprimé, avec chaque fois une alimentation (19, 20, 21) pour raccorder une source de pression (11, 13) et au moins une ligne de freinage (I, II) de l'installation de freinage et chaque fois un échappement (23, 34) pour raccorder une tête d'accouplement de ligne de freinage (26) et une tête d'accouplement de ligne de réserve (25) et avec une soupape d'étranglement intégrée (28), qui étrangle un canal de liaison (29, 31') jusqu'à un barrage complet vers la tête d'accouplement de ligne de freinage (26), en cas de chute de pression à l'échappement (24) vers la tête d'accouplement de ligne de freinage (26), pendant que l'on injecte une pression dans l'alimentation de la ligne de freinage (21, 22) entre l'alimentation de la source de pression (19) et l'échappement (23) vers la tête d'accouplement de ligne de réserve (25), caractérisée par une soupape de limitation de pression intégrée (27, 27') disposée dans le canal de liaison (29, 31') et combinée avec la soupape d'étranglement (28, 28') présentant un siège de soupape (32, 32') commun, disposé dans le canal de liaison (29, 31) commun, et un élément de soupape (33, 33') commun, sur lequel un élément d'actionnement affecté à la soupape de limitation de pression et d'étranglement (27, 28, 27', 28') vient chaque fois en prise dans le sens de la fermeture de la soupape.

2. Soupape de commande selon la revendication 1, caractérisée en ce que l'élément d'actionnement de la soupape de limitation de pression (27, 27') est réalisée sous forme de piston coulissant (34, 34') pouvant être soumis à la pression derrière le siège de soupape (32, 32'), dans le sens de l'écoulement, piston coulissant mobile par rapport à l'élément de soupape (33, 33') et agissant dans le sens de la fermeture sur un élément d'entraînement (36, 36') situé sur l'élément de soupape (33, 33'), et en ce qu'un ressort de limitation de pression (35, 35') s'appuie sur le piston coulissant (34, 34') à l'opposé du sens de sollicitation en pression du piston coulissant (34, 34').

3. Soupape de commande selon la revendication 2, caractérisée en ce que le ressort de limitation de pression (35, 35') est dimensionné de façon à ce que l'élément de soupape (33, 33') appuie de manière étanche sur le siège de soupape (32, 32') dans le cas d'une valeur pouvant être prédéterminée de la pression d'entrée dans le canal de liaison (29, 31').

4. Soupape de commande selon la revendication 2 ou 3, caractérisée en ce que le ressort de limitation de pression (35') appuie, avec l'extrémité opposée au piston coulissant (34'), sur un élément d'appui (60') maintenu mobile dans la direction d'action du ressort de limitation (35').

5. Soupape de commande selon la revendication 4, caractérisé en ce que l'élément d'appui (60') est fixé sur une vis de réglage (61') qui est susceptible d'être vissée dans un alésage fileté (62') situé dans le carter de soupape (40') et émerge sur le carter de soupape (40') en étant librement accessible.

6. Soupape de commande selon l'une des revendications 1 à 5, caractérisée en ce que l'élément d'actionnement de la soupape d'étranglement (28, 28') est réalisé sous forme de piston de réglage (37, 37'), délimitant, avec une première surface de sollicitation en pression, une première chambre de sollicitation en pression (41, 41') reliée à l'alimentation de la ligne de freinage (20) et délimitant avec l'autre surface de sollicitation en pression une deuxième chambre de sollicitation en pression (42, 42') relié à l'échappement (24) allant vers la tête d'accouplement de ligne de freinage (26), et en ce que le piston de réglage (37, 37') sollicite l'élément de soupape (33, 33') dans le sens de la fermeture de soupape.

7. Soupape de commande selon la revendication 6, caractérisée en ce qu'un ressort de rappel (45, 45') s'appuyant sur la surface de sollicitation en pression du piston de réglage (37, 37') est disposé dans la deuxième chambre de sollicitation en pression (42, 42').

8. Soupape de commande selon la revendication 6 ou 7, caractérisée en ce que les deux surfaces de sollicitation en pression du piston de réglage (37, 37') sont identiques.

9. Soupape de commande selon l'une des revendications 1 à 7, caractérisée en ce que l'élément de soupape (33') est réalisé sous forme d'un tube de soupape (55'), traversant le siège de soupape (32') avec une bride annulaire (56'), applicable sur le siège de soupape (32') et portant l'élément d'entraînement (36') à une extrémité.

10. Soupape de commande selon la revendication 9, caractérisée en ce que le piston coulissant (34') repose mobile axialement sur le tube de soupape (55') et en ce que le piston coulissant (34') obture de manière étanche le canal de liaison (31') vis-à-vis d'une chambre de désaération (58') dans laquelle émerge le tube de soupape (55').

11. Soupape de commande selon la revendication 9 ou 10, caractérisée en ce que le piston de réglage (37') est réalisé sous forme de tube de réglage (63') avec une bride annulaire (64') disposée au centre, formant les surfaces sollicitées en pression du piston de réglage et en ce que le tube de réglage (63') et le tube de soupape (55') se touchent frontalement dans leur position de base.

12. Soupape de commande selon l'une des revendications 1 à 11, caractérisée par une chambre d'alimentation de soupape (30) reliée par un canal d'alimentation (29) à l'alimentation de source de pression (19) et par un canal d'échappement (31, 31') à l'échappement vers la tête d'accouplement de ligne de réserve (25), et en ce que le canal de liaison est formé du canal d'alimentation (29) ou du canal d'échappement (31').

Fig. 1

EP 0 157 945 B1

Fig. 2